# EUROPEAN PATENT SPECIFICATION

(11) **EP 2 813 973 B1**
(45) Date of publication and mention of the grant of the patent: **03.02.2016**
(21) Application number: 12876081.6
(22) Date of filing: 26.11.2012
(51) Int. Cl.: G06T 7/20, G06T 7/00, G06K 9/20, G06K 9/00

(54) **METHOD AND SYSTEM FOR PROCESSING VIDEO IMAGE**
VERFAHREN UND SYSTEM ZUR VERARBEITUNG VON VIDEOBILDERN
PROCÉDÉ ET SYSTÈME DE TRAITEMENT D'UNE IMAGE VIDÉO

(43) Date of publication of application: 17.12.2014
(73) Proprietor: Huawei Technologies Co., Ltd., Longgang District Shenzhen, Guangdong 518129 (CN)
(72) Inventor: LI, Yongan, Shenzen, Guangdong 518129 (CN)
(74) Representative: Goddar, Heinz J.
(86) International application number: PCT/CN2012/085258
(87) International publication number: WO 2014/079058

(56) References cited:
- CN-A- 101 231 694
- CN-A- 101 888 479
- CN-A- 102 521 842
- DE-A1-102009 038 364
- YANWEN CHONG ET AL: "Integrated Real-Time Vision-Based Preceding Vehicle Detection in Urban Roads", ADVANCED INTELLIGENT COMPUTING, SPRINGER BERLIN HEIDELBERG, BERLIN, HEIDELBERG, vol. 6838, 1 January 2012 (2012-01-01), pages 270-275, XP019172782, ISBN: 978-3-642-24727-9
- XIN LIU ET AL: "Real-Time On-Road Vehicle Detection Combining Specific Shadow Segmentation and SVM Classification", DIGITAL MANUFACTURING AND AUTOMATION (ICDMA), 2011 SECOND INTERNATIONAL CONFERENCE ON, IEEE, 5 August 2011 (2011-08-05), pages 885-888, XP032064237, DOI: 10.1109/ICDMA.2011.219 ISBN: 978-1-4577-0755-1
- KILGER M: "A shadow handler in a video-based real-time traffic monitoring system", APPLICATIONS OF COMPUTER VISION, PROCEEDINGS, 1992., IEEE WORKSHOP ON PALM SPRINGS, CA, USA 30 NOV.-2 DEC. 1992, LOS ALAMITOS, CA, USA,IEEE COMPUT. SOC, US, 30 November 1992 (1992-11-30), pages 11-18, XP010029167, DOI: 10.1109/ACV.1992.240332 ISBN: 978-0-8186-2840-5
- DENNIS ROSEBROCK ET AL: "Real-time vehicle detection with a single camera using shadow segmentation and temporal verification", INTELLIGENT ROBOTS AND SYSTEMS (IROS), 2012 IEEE/RSJ INTERNATIONAL CONFERENCE ON, IEEE, 7 October 2012 (2012-10-07), pages 3061-3066, XP032287471, DOI: 10.1109/IROS.2012.6385625 ISBN: 978-1-4673-1737-5
- SOO SIANG TEOH ET AL: "Symmetry-based monocular vehicle detection system", MACHINE VISION AND APPLICATIONS, SPRINGER, BERLIN, DE, vol. 23, no. 5, 8 July 2011 (2011-07-08), pages 831-842, XP035098116, ISSN: 1432-1769, DOI: 10.1007/S00138-011-0355-7
- WANG, KUN ET AL.: 'Detection and tracking algorithm for head of UAV Based on local contour features' OPTICAL TECHNIQUE vol. 37, no. 2, 31 March 2011, pages 178 - 181, XP008171286

## Description

### TECHNICAL FIELD

The present application relates to the field of video image processing, and in particular, to a method and a system for processing a video image.

### BACKGROUND

In a traffic management platform, vehicle detection is generally implemented by using a manner of processing a video image. A traditional method for processing a video image is taken as an example. Generally, a virtual view is manually set in a video surveillance area (that is, a video analysis area is selected), vehicle characteristics (such as a darkest shadow in front of a vehicle, a license plate, a vehicle color, a vehicle type, and a light) are detected in the virtual view, and then vehicle detection is implemented by analyzing the vehicle characteristics. Yanwen Chong ET AL: "integrated real-time vision-based preceding vehicle detection in urban roads", Advanced Intelligent Computing, Springer Berlin Heidelberg, vol. 6838, 1 January 2012, pages 270-275, provides a real-time algorithm for a vision-based preceding vehicle detection system. The algorithm contains two main components: vehicle detection with various vehicle features, and vehicle detection verification with dynamic tracking. Vehicle detection is achieved using vehicle shadow features to define a region of interest (ROI). After utilizing methods such as histogram equalization, ROI entropy and mean of edge image, the exact vehicle rear box is determined. In the vehicle tracking process, the predicted box is verified and updated. Test results demonstrate that the new system possesses good detection accuracy and can be implemented in real-time operation.

Xin Liu ET AL: "real-time on-road vehicle detection combining specific shadow segmentation and SVM classification", Digital Manufacturing and Automation (ICDMA), 2011 Second international Conference on , IEEE, 5 August 2011, pages 885-888, provides a vision-based vehicle detection approach. Combing segmenting the specific shadow area underneath the vehicle and using SVM-based classifier, the proposed approach is accurate and efficient for intelligent vehicle. Experiment results with test dataset from real traffic scenes on freeways and urban roads are presented to illustrate the performance of this approach.

Kilger M: "A shadow handler in a video-based real-time traffic monitoring system", Applications of Computer Vision Proceedings, 1992., IEEE workshop on palm springs, CA, USA 30 Nov.-2 Dec. 1992, LOS ALAMITOS, CA, USA, IEEE COMPUT. SOC, US, 30 November 1992 (1992-11-30), pages 11-18, provides a video-based system for traffic monitoring is presented, The objective of the system is to set up a high-level description of the traffic scene comprising the position, speed and class of the vehicles. Algorithms for detecting moving objects, separating the vehicles from their shadows, tracking and classification are presented. Especially the classification of the vehicles. Our novel approach for classification runs in real-time on a low-cost hardware. The shadow can be separated from the vehicle and the knowledge about the shape of the shadow can be efficiently used. The shadow analysis algorithm itself uses high-level knowledge about the geometry of the scene (heading of the observed road) and about global data (data and time).

Dennis Rosebrock ET AL: " real-time vehicle detection with a single camera using shadow segmentation and temporal verification", Intelligent Robots and Systems (IROS), 2012, IEEE/RSJ international Conference on , IEEE, 7 October 2012 , pages 3061-3066, provides a vehicle detection with a monocular video sensor offers significant potential in a wide area of promising automotive applications, In this work the shadows in daylight scenes are used to detect vehicles in low-quality camera images and determine their positions and velocities in relation to the own vehicle. We propose a new algorithm that segments shadows in a top-down-view, In contrast to other works no specific thresholds or strong shadow edges are needed. Instead we binarize the image at multiple thresholds and analyze the results to generated vehicle position hypotheses. These hypotheses are verified with a RANSAC-based temporal verification approach. The accuracy of the method is evaluated using monocular real world sequences and ground truth data. Our algorithm works robustly under various lighting conditions in real-time at full video frame rate.

However, practice has shown that the method for processing a video image can only detect existence of a vehicle, but cannot extract each complete vehicle object in a complex video surveillance environment (such as surveillance video jitter or vehicle congestion).

### SUMMARY

Embodiments of the present application provide a method and a system for processing a video image, which can extract each complete moving object in a complex video surveillance environment (such as surveillance video jitter or congestion of moving objects).

The present application provides a method for processing a video image as set out in appended claims 1 to 4.

The present application also provides a system for processing a video image as set out in appended claims 5 to 8.

According to the embodiments of the present application, each complete moving object can be extracted in a complex traffic video surveillance environment (such as surveillance video jitter or congestion of moving objects).

### BRIEF DESCRIPTION OF DRAWINGS

To illustrate the technical solutions in the embodiments of the present application or in the prior art more clearly, the following briefly introduces the accompanying drawings required for describing the embodiments. Apparently, the accompanying drawings in the following description show merely some embodiments of the present application, and a person of ordinary skill in the art may still derive other drawings from these accompanying drawings without creative efforts.
FIG. 1 is a flowchart of a method for processing a video image according to an embodiment of the present application;
FIG. 2A and FIG 2B are a flowchart of a method for extracting shadows of a moving objects in a current video image according to an embodiment of the present application;
FIG. 3A and FIG. 3B are a is a flowchart of a method for adjusting an imaginary box of a moving object according to an embodiment of the present application;
FIG. 4 is a schematic diagram of three-dimensional extension of an imaginary box of a moving object according to an embodiment of the present application;
FIG. 5 is a structural diagram of a system for processing a video image according to an embodiment of the present application;
FIG. 6 is a structural diagram of another system for processing a video image according to an embodiment of the present application; and
FIG. 7 is a structural diagram of still another system for processing a video image according to an embodiment of the present application.

### DESCRIPTION OF EMBODIMENTS

The following clearly and completely describes the technical solutions in the embodiments of the present application with reference to the accompanying drawings in the embodiments of the present application. Apparently, the described embodiments are merely a part rather than all of the embodiments of the present application. All other embodiments obtained by a person of ordinary skill in the art based on the embodiments of the present application without creative efforts shall fall within the protection scope of the present application.

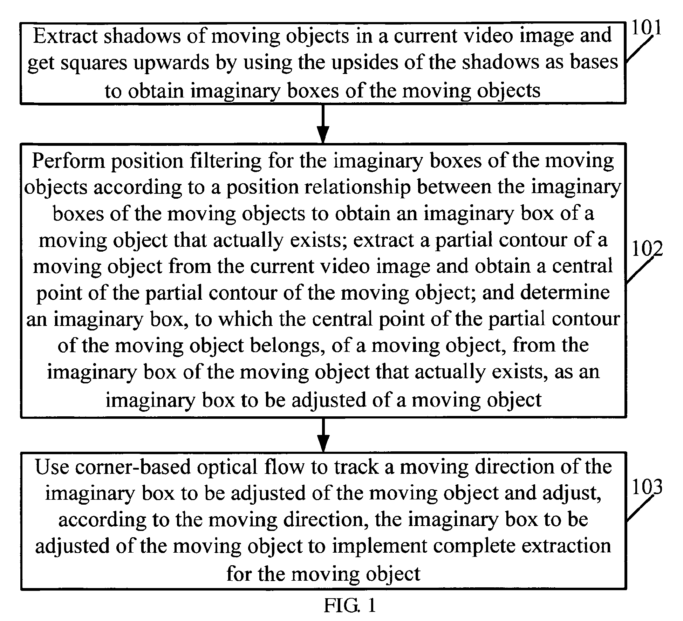

Embodiments of the present application provide a method and a system for processing a video image, which can extract each complete moving object in a complex video surveillance environment (such as surveillance video jitter or congestion of moving objects). The embodiments of the present application are described in detail as follows:
Referring to FIG. 1, FIG. 1 is a flowchart of a method for processing a video image according to an embodiment of the present application. As shown in FIG. 1, the method for processing a video image may include the following steps:
   101. Extract shadows of moving objects in a current video image and get squares upwards by using the upsides of the shadows as bases to obtain imaginary boxes of the moving objects.
      In this embodiment of the present application, the moving objects may include a vehicle, a pedestrian, and an animal, which is not specifically limited in this embodiment of the present application.
      In this embodiment of the present application, multiple shadows of moving objects may be extracted from the current video image, and a square may be gotten upwards by using the upside of each shadow separately as a base to obtain multiple imaginary boxes of the moving objects.
   102. Perform position filtering for the imaginary boxes of the moving objects according to a position relationship between the imaginary boxes of the moving objects to obtain an imaginary box of a moving object that actually exists; extract a partial contour of a moving object from the current video image and obtain a central point of the partial contour of the moving object; and determine an imaginary box, to which the central point of the partial contour of the moving object belongs, of a moving object, from the imaginary box of the moving object that actually exists, as an imaginary box to be adjusted of a moving object.
      In this embodiment of the present application, the position relationship between the imaginary boxes of the moving objects may include inclusion, internal tangency, intersection, external tangency, and external separation, which is not limited in this embodiment of the present application.
   103. Use comer-based optical flow to track a moving direction of the imaginary box to be adjusted of the moving object and adjust, according to the moving direction, the imaginary box to be adjusted of the moving object to implement complete extraction for the moving object.
      In this embodiment of the present application, a corner is a point with a high curvature in a video image. An operation may be performed on grayscales of the video image, curvatures of video image grayscale distribution curves may be calculated, and a point with the highest curvature may be selected as a corner.

In this embodiment of the present application, the optical flow is a speed of mode movement in the video image. The optical flow changes the video image into a vector field of speeds, and each vector represents a momentary position change of a point in a scene in an image. Therefore, the optical flow carries abundant information about object movement and a three-dimensional structure of the scene, and existence of a moving object in the video image can be determined by analyzing an optical flow field.

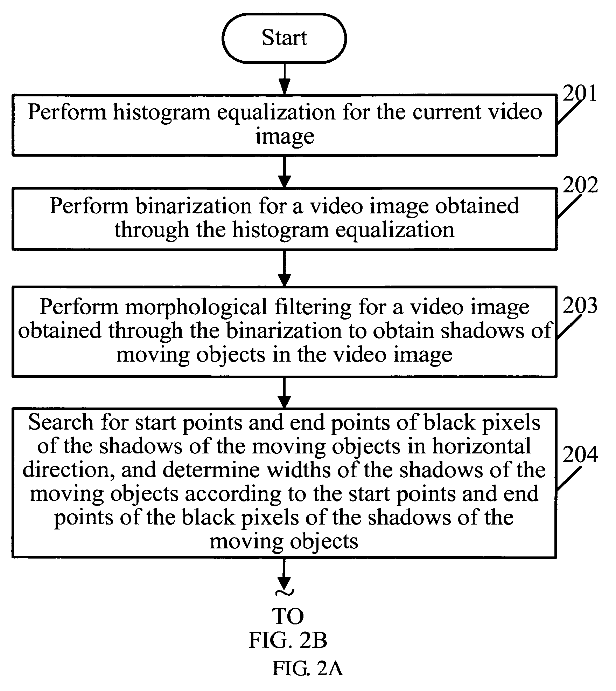

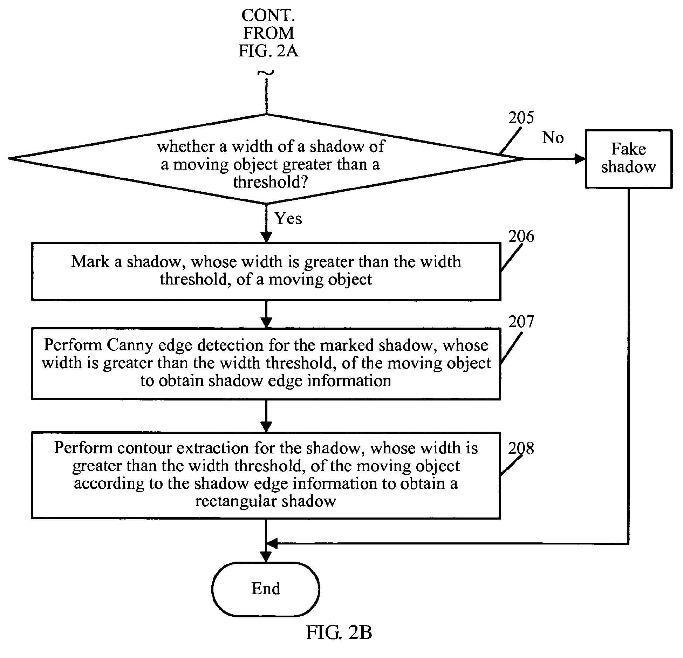

Referring to FIG. 2A and FIG. 2B at the same time, FIG. 2A and FIG. 2B are a flowchart of a method for implementing extraction of shadows of moving objects in a current video image in the preceding step 101 according to an embodiment of the present application. As shown in FIG. 2A and FIG. 2B, the method for extracting the shadows of the moving objects in the current video image includes the following steps:
201. Perform histogram equalization for the current video image.
   Performing histogram equalization for the current video image can remove the impact of illumination.
202. Perform binarization for a video image obtained through the histogram equalization.
203. Perform morphological filtering for a video image obtained through the binarization to obtain shadows of moving objects in the video image.
204. Search for start points and end points of black pixels of the shadows of the moving objects in horizontal direction, and determine widths of the shadows of the moving objects according to the start points and end points of the black pixels of the shadows of the moving objects.
205. Determine whether a width of a shadow of a moving object is greater than a width threshold; if yes, perform steps 206-208; or if no, determine that the shadow of the moving object is a fake shadow and end the process.
   For example, in a situation in which the size of the video image is 320 x 240 pixels, the width threshold may be set to 20 pixels.
206. Mark a shadow, whose width is greater than the width threshold, of a moving object.
207. Perform Canny edge detection for the marked shadow, whose width is greater than the width threshold, of the moving object to obtain shadow edge information.
208. Perform contour extraction for the shadow, whose width is greater than the width threshold, of the moving object according to the shadow edge information to obtain a rectangular shadow.

In this embodiment of the present application, in the preceding step 102, the performing position filtering for the imaginary boxes of the moving objects according to a position relationship between the imaginary boxes of the moving objects to obtain an imaginary box of a moving object that actually exists may specifically be as follows:
if the position relationship between the imaginary boxes of the moving objects is external tangency and/or external separation, regarding the imaginary boxes of the moving objects that are externally tangent to each other and/or externally separated from each other as imaginary boxes of moving objects that actually exist; and/or
if the position relationship between the imaginary boxes of the moving objects is inclusion and/or internal tangency, regarding an outer one of the imaginary boxes of the moving objects that are in an inclusion relationship and/or internally tangent to each other as an imaginary box of a moving object that actually exists; and/or
if the position relationship between the imaginary boxes of the moving objects is mutual intersection and an intersection area is greater than or equal to a threshold, regarding an outer imaginary box including the imaginary boxes of the moving objects that intersect each other and whose intersection area is greater than or equal to the threshold as an imaginary box of a moving object that actually exists, where a diagonal length of the outer imaginary box is equal to a length of a connection line of opposite angles farthest from each other between the imaginary boxes of the moving objects that intersect each other and whose intersection area is greater than or equal to the threshold, and the outer imaginary box is regarded as the imaginary box of the moving object that actually exists; and/or
if the position relationship between the imaginary boxes of the moving objects is mutual intersection and an intersection area is less than the threshold, regarding the imaginary boxes of the moving objects that intersect each other and whose intersection area is less than or equal to the threshold as imaginary boxes of moving objects that actually exist.

In this embodiment of the present application, in the preceding step 102, the extracting a partial contour of a moving object from the current video image and obtaining a central point of the partial contour of the moving object may specifically be as follows:
performing an inter-frame difference operation for the current video image to obtain the partial contour of the moving object; and
after performing morphological filtering for the partial contour of the moving object, performing contour extraction to obtain the central point of the partial contour of the moving object. Accordingly, in the preceding step 102, the determining an imaginary box, to which the central point of the partial contour of the moving object belongs, of a moving object, from the imaginary box of the moving object that actually exists, as an imaginary box to be adjusted of a moving object may specifically be as follows:
performing a logical AND operation for the central point of the partial contour of the moving object and the imaginary box of the moving object that actually exists to obtain the imaginary box, to which the central point of the partial contour of the moving object belongs, of the moving object, from the imaginary box of the moving object that actually exists, as the imaginary box to be adjusted of the moving object.

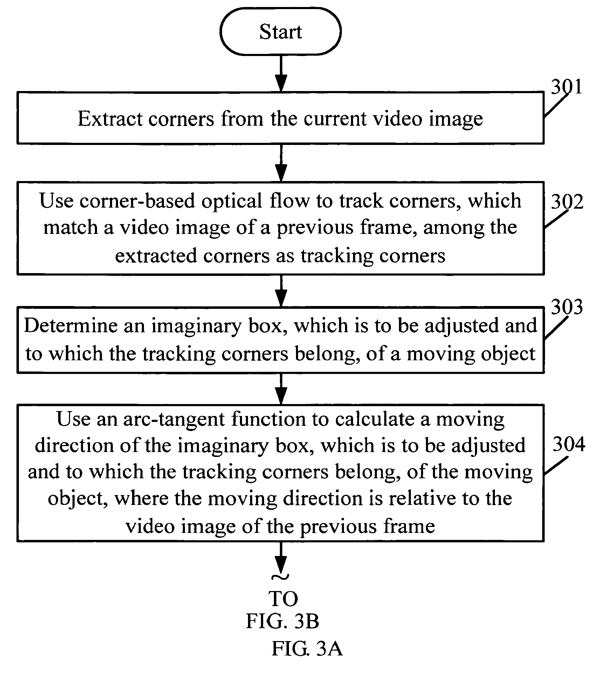

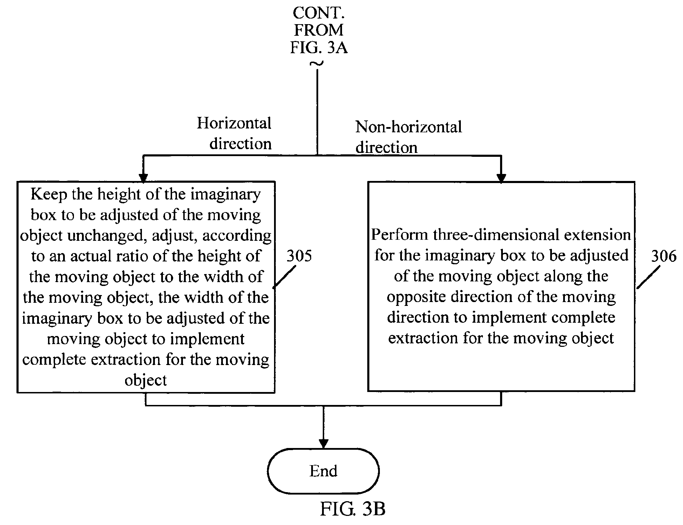

Referring to FIG. 3A and FIG. 3B , FIG. 3A and FIG. 3B are a flowchart of a method for adjusting an imaginary box of a moving object according to an embodiment of the present application, and the method is used to implement the preceding step 103. As shown in FIG. 3A and FIG. 3B, the method may include the following steps:
301. Extract corners from the current video image.
302. Use comer-based optical flow to track corners, which match a video image of a previous frame, among the extracted corners as tracking corners.
303. Determine an imaginary box, which is to be adjusted and to which the tracking corners belong, of a moving object.
304. Use an arc-tangent function to calculate a moving direction of the imaginary box, which is to be adjusted and to which the tracking corners belong, of the moving object, where the moving direction is relative to the video image of the previous frame; and if the moving direction is the horizontal direction, perform step 305; or if the moving direction is a non-horizontal direction, perform step 306.
305. Keep the height of the imaginary box to be adjusted of the moving object unchanged, adjust, according to an actual ratio of the height of the moving object to the width of the moving object, the width of the imaginary box to be adjusted of the moving object to implement complete extraction for the moving object, and end the process.

For example, when the moving object is a vehicle, the actual ratio of its height to its width is 1:3. 306. Perform three-dimensional extension for the imaginary box to be adjusted of the moving object along the opposite direction of the moving direction to implement complete extraction for the moving object, and end the process.

For example, an extended length may be equal to one half of the width of the imaginary box to be adjusted of the moving object.

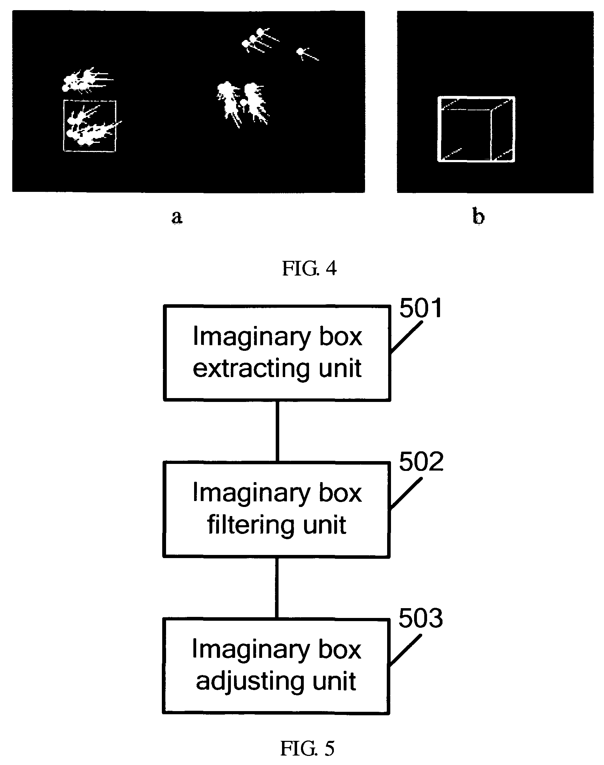

For example, it is assumed that the imaginary box, which is to be adjusted and to which the tracking corners belong, of the moving object determined in the preceding step 303 is shown in FIG. 4 a. In the figure, white dots represent tracking corners; accordingly, the moving direction of the imaginary box, which is to be adjusted and to which the tracking corners belong, of the moving object that is calculated by using the arc-tangent function in the preceding step 304 is from the upper right corner to the lower left corner, where the moving direction is relative to the video image of the previous frame; and accordingly, in step 306, the three-dimensional extension may be performed for the imaginary box to be adjusted of the moving object along the direction from the lower left corner to the upper right corner to implement complete extraction for the moving object, where an extended length, as shown in FIG. 4b, may be equal to one half of the width of the imaginary box to be adjusted of the moving object.

The foregoing describes in detail the method for processing a video image according to the embodiments of the present application. According to the embodiments of the present application, each complete moving object can be extracted by software in a complex video surveillance environment (such as surveillance video jitter or congestion of moving objects).

Referring to FIG. 5, FIG. 5 is a structural diagram of a system for processing a video image according to an embodiment of the present application. As shown in FIG. 5, the system for processing a video image includes:
an imaginary box extracting unit 501, configured to extract shadows of moving objects in a current video image and get squares upwards by using the upsides of the shadows as bases to obtain imaginary boxes of the moving objects;
an imaginary box filtering unit 502, configured to perform position filtering for the imaginary boxes of the moving objects according to a position relationship between the imaginary boxes of the moving objects to obtain an imaginary box of a moving object that actually exists, extract a partial contour of a moving object from the current video image and obtain a central point of the partial contour of the moving object, and determine an imaginary box, to which the central point of the partial contour of the moving object belongs, of a moving object, from the imaginary box of the moving object that actually exists, as an imaginary box to be adjusted of a moving object; and
an imaginary box adjusting unit 503, configured to use comer-based optical flow to track a moving direction of the imaginary box to be adjusted of the moving object and adjust, according to the moving direction, the imaginary box to be adjusted of the moving object to implement complete extraction for the moving object.

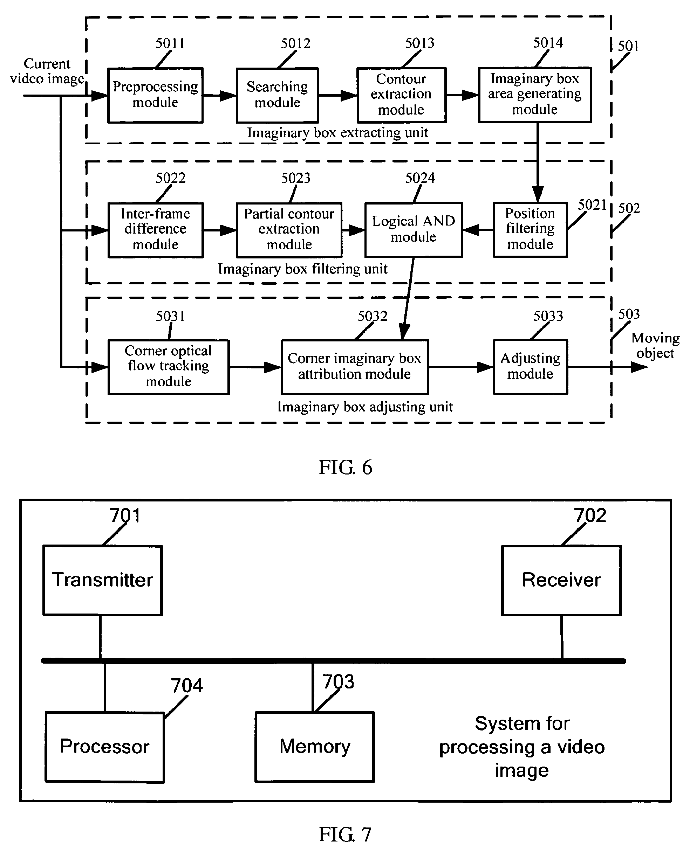

Referring to FIG. 6 at the same time, FIG. 6 is a structural diagram of another system for processing a video image according to an embodiment of the present application. The system, shown in FIG. 6, for processing a video image is obtained by optimizing the system, shown in FIG. 5, for processing a video image. In the system, shown in FIG. 6, for processing a video image, the imaginary box extracting unit 501 includes:
a preprocessing module 5011, configured to perform histogram equalization for the current video image, perform binarization for a video image obtained through the histogram equalization, and perform morphological filtering for a video image obtained through the binarization to obtain shadows of moving objects in the video image;
a searching module 5012, configured to search for start points and end points of black pixels of the shadows of the moving objects in horizontal direction, determine widths of the shadows of the moving objects according to the start points and end points of the black pixels of the shadows of the moving objects, and mark a shadow, whose width is greater than a width threshold, of a moving object;
a contour extraction module 5013, configured to perform Canny edge detection for the shadow, whose width is greater than the width threshold and which is marked by the searching module 5012, of the moving object to obtain shadow edge information, and perform contour extraction for the shadow, whose width is greater than the width threshold, of the moving object according to the shadow edge information to obtain a rectangular shadow; and
an imaginary box area generating module 5014, configured to get a square upwards by using the upside of the rectangular shadow as a base to obtain an imaginary box of the moving object.

In the system, shown in FIG. 6, for processing a video image, the imaginary box filtering unit 502 includes:
a position filtering module 5021, configured to: in a situation in which the position relationship between the imaginary boxes of the moving objects is external tangency and/or external separation, regard the imaginary boxes of the moving objects that are externally tangent to each other and/or externally separated from each other as imaginary boxes of moving objects that actually exist; and/or in a situation in which the position relationship between the imaginary boxes of the moving objects is inclusion and/or internal tangency, regard an outer one of the imaginary boxes of the moving objects that are in an inclusion relationship and/or internally tangent to each other as an imaginary box of a moving object that actually exists; and/or in a situation in which the position relationship between the imaginary boxes of the moving objects is mutual intersection and an intersection area is greater than or equal to a threshold, regard an outer imaginary box including the imaginary boxes of the moving objects that intersect each other and whose intersection area is greater than or equal to the threshold as an imaginary box of a moving object that actually exists, where a diagonal length of the outer imaginary box is equal to a length of a connection line of opposite angles farthest from each other between the imaginary boxes of the moving objects that intersect each other and whose intersection area is greater than or equal to the threshold, and the outer imaginary box is regarded as the imaginary box of the moving object that actually exists; and/or in a situation in which the position relationship between the imaginary boxes of the moving objects is mutual intersection and an intersection area is less than the threshold, regard the imaginary boxes of the moving objects that intersect each other and whose intersection area is less than or equal to the threshold as imaginary boxes of moving objects that actually exist;
an inter-frame difference module 5022, configured to perform an inter-frame difference operation for the current video image to obtain the partial contour of the moving object;
a partial contour extraction module 5023, configured to: after performing morphological filtering for the partial contour of the moving object, perform contour extraction to obtain the central point of the partial contour of the moving object; and
a logical AND module 5024, configured to perform a logical AND operation for the central point of the partial contour of the moving object and the imaginary box of the moving object that actually exists to obtain the imaginary box, to which the central point of the partial contour of the moving object belongs, of the moving object, from the imaginary box of the moving object that actually exists, as the imaginary box to be adjusted of the moving object.

In the system, shown in FIG. 6, for processing a video image, the imaginary box adjusting unit 503 includes:
a corner optical flow tracking module 5031, configured to extract corners from the current video image and use corner-based optical flow to track corners, which match a video image of a previous frame, among the extracted corners as tracking corners;
a corner imaginary box attribution module 5032, configured to determine an imaginary box, which is to be adjusted and to which the tracking corners belong, of a moving object; and
an adjusting module 5033, configured to use an arc-tangent function to calculate a moving direction of the imaginary box, which is to be adjusted and to which the tracking corners belong, of the moving object, where the moving direction is relative to the video image of the previous frame; and in a situation in which the moving direction is the horizontal direction, keep the height of the imaginary box to be adjusted of the moving object unchanged, adjust, according to an actual ratio of the height of the moving object to the width of the moving object, the width of the imaginary box to be adjusted of the moving object to implement complete extraction for the moving object; or in a situation in which the moving direction is a non-horizontal direction, perform three-dimensional extension for the imaginary box to be adjusted of the moving object along the opposite direction of the moving direction to implement complete extraction for the moving object. For example, an extended length may be equal to one half of the width of the imaginary box to be adjusted of the moving object.

Referring to FIG. 7, FIG. 7 is a structural diagram of still another system for processing a video image according to an embodiment of the present application. As shown in FIG. 7, the system for processing a video image includes a transmitter 701, a receiver 702, a memory 703, and a processor 704 connected to the transmitter 701, the receiver 702, and the memory 703, respectively, where:
the memory 703 stores a set of program codes, and the processor 704 is configured to invoke the program codes stored in the memory 703 to perform the following operations:
   extracting shadows of moving objects in a current video image and getting squares upwards by using the upsides of the shadows as bases to obtain imaginary boxes of the moving objects;
   performing position filtering for the imaginary boxes of the moving objects according to a position relationship between the imaginary boxes of the moving objects to obtain an imaginary box of a moving object that actually exists; extracting a partial contour of a moving object from the current video image and obtaining a central point of the partial contour of the moving object; and determining an imaginary box, to which the central point of the partial contour of the moving object belongs, of a moving object, from the imaginary box of the moving object that actually exists, as an imaginary box to be adjusted of a moving object; and
   using comer-based optical flow to track a moving direction of the imaginary box to be adjusted of the moving object and adjusting, according to the moving direction, the imaginary box to be adjusted of the moving object to implement complete extraction for the moving object.

In an embodiment, the extracting, by the processor 704, shadows of moving objects in a current video image and getting squares upwards by using the upsides of the shadows as bases to obtain imaginary boxes of the moving objects is specifically as follows:
performing histogram equalization for the current video image;
performing binarization for a video image obtained through the histogram equalization;
performing morphological filtering for a video image obtained through the binarization to obtain shadows of moving objects in the video image;
searching for start points and end points of black pixels of the shadows of the moving objects in horizontal direction, determining widths of the shadows of the moving objects according to the start points and end points of the black pixels of the shadows of the moving objects, and marking a shadow, whose width is greater than a width threshold, of a moving object;
performing Canny edge detection for the marked shadow, whose width is greater than the width threshold, of the moving object to obtain shadow edge information;
performing contour extraction for the shadow, whose width is greater than the width threshold, of the moving object according to the shadow edge information to obtain a rectangular shadow; and
getting a square upwards by using the upside of the rectangular shadow as a base to obtain an imaginary box of the moving object.

In an embodiment, the performing, by the processor 704, position filtering for the imaginary boxes of the moving objects according to a position relationship between the imaginary boxes of the moving objects to obtain an imaginary box of a moving object that actually exists is specifically as follows:
if the position relationship between the imaginary boxes of the moving objects is external tangency and/or external separation, regarding the imaginary boxes of the moving objects that are externally tangent to each other and/or externally separated from each other as imaginary boxes of moving objects that actually exist; and/or
if the position relationship between the imaginary boxes of the moving objects is inclusion and/or internal tangency, regarding an outer one of the imaginary boxes of the moving objects that are in an inclusion relationship and/or internally tangent to each other as an imaginary box of a moving object that actually exists; and/or
if the position relationship between the imaginary boxes of the moving objects is mutual intersection and an intersection area is greater than or equal to a threshold, regarding an outer imaginary box including the imaginary boxes of the moving objects that intersect each other and whose intersection area is greater than or equal to the threshold as an imaginary box of a moving object that actually exists, where a diagonal length of the outer imaginary box is equal to a length of a connection line of opposite angles farthest from each other between the imaginary boxes of the moving objects that intersect each other and whose intersection area is greater than or equal to the threshold, and the outer imaginary box is regarded as the imaginary box of the moving object that actually exists; and/or
if the position relationship between the imaginary boxes of the moving objects is mutual intersection and an intersection area is less than the threshold, regarding the imaginary boxes of the moving objects that intersect each other and whose intersection area is less than or equal to the threshold as imaginary boxes of moving objects that actually exist.

In an embodiment, the extracting, by the processor 704, a partial contour of a moving object from the current video image and obtaining a central point of the partial contour of the moving object is specifically as follows:
performing an inter-frame difference operation for the current video image to obtain the partial contour of the moving object; and
after performing morphological filtering for the partial contour of the moving object, performing contour extraction to obtain the central point of the partial contour of the moving object. Accordingly, the determining, by the processor 704, an imaginary box, to which the central point of the partial contour of the moving object belongs, of a moving object, from the imaginary box of the moving object that actually exists, as an imaginary box to be adjusted of a moving object is specifically as follows:
performing a logical AND operation for the central point of the partial contour of the moving object and the imaginary box of the moving object that actually exists to obtain the imaginary box, to which the central point of the partial contour of the moving object belongs, of the moving object, from the imaginary box of the moving object that actually exists, as the imaginary box to be adjusted of the moving object.

In an embodiment, the using, by the processor 704, corner-based optical flow to track a moving direction of the imaginary box to be adjusted of the moving object is specifically as follows:
extracting corners from the current video image;
using corner-based optical flow to track corners, which match a video image of a previous frame, among the extracted corners as tracking corners;
determining an imaginary box, which is to be adjusted and to which the tracking corners belong, of a moving object; and
using an arc-tangent function to calculate a moving direction of the imaginary box, which is to be adjusted and to which the tracking corners belong, of the moving object, where the moving direction is relative to the video image of the previous frame.

Accordingly, the adjusting, by the processor 704 according to the moving direction, the imaginary box to be adjusted of the moving object to implement complete extraction for the moving object is specifically as follows:
if the moving direction is the horizontal direction, keeping the height of the imaginary box to be adjusted of the moving object unchanged, and adjusting, according to an actual ratio of the height of the moving object to the width of the moving object, the width of the imaginary box to be adjusted of the moving object to implement complete extraction for the moving object; or
if the moving direction is a non-horizontal direction, performing three-dimensional extension for the imaginary box to be adjusted of the moving object along the opposite direction of the moving direction to implement complete extraction for the moving object, where an extended length may be equal to one half of the width of the imaginary box to be adjusted of the moving object.

The foregoing describes in detail the system for processing a video image according to the embodiments of the present application. The system for processing a video image according to the embodiments of the present application can use software to extract each complete moving object in a complex video surveillance environment (such as surveillance video jitter or congestion of moving objects).

A person skilled in the art may understand that, all or part of the steps of the methods in the foregoing embodiments may be implemented by a program instructing relevant hardware. The program may be stored in a computer readable storage medium, and the storage medium may include: a flash drive, a read-only memory (Read-Only Memory, ROM), a random access memory (Random Access Memory, RAM), a magnetic disk, or an optical disk and so on.

The foregoing describes in detail the method and the system for processing a video image according to the embodiments of the present application. In this specification, specific examples are used for illustrating principles and implementation manners of the present application. The foregoing descriptions of the embodiments are merely used to help understand the methods of the present application. Meanwhile, a person of ordinary skill in the art may make modifications to the specific implementation manners and application scopes. In conclusion, the content of this specification shall not be construed as a limitation to the present application.

## Claims

1. A method for processing a video image, comprising:
extracting (101) shadows of moving objects in a current video image and getting (101) squares upwards by using the upsides of the shadows as bases to obtain imaginary boxes of the moving objects;
performing position filtering (102) for the imaginary boxes of the moving objects according to a position relationship between the imaginary boxes of the moving objects to obtain an imaginary box of a moving object that actually exists; extracting (102) a partial contour of a moving object from the current video image and obtaining a central point of the partial contour of the moving object; and determining (102) an imaginary box, to which the central point of the partial contour of the moving object belongs, of a moving object, from the imaginary box of the moving object that actually exists, as an imaginary box to be adjusted of a moving object; and
using corner-based optical flow to track (103) a moving direction of the imaginary box to be adjusted of the moving object and adjusting (103), according to the moving direction, the imaginary box to be adjusted of the moving object to implement complete extraction for the moving object;
**characterized in that** the using corner-based optical flow to track a moving direction of the imaginary box to be adjusted of the moving object comprises:
extracting (301) corners from the current video image;
using comer-based optical flow to track (302) corners, which match a video image of a previous frame, among the extracted corners as tracking corners;
determining (303) imaginary box, which is to be adjusted and to which the tracking corners of a moving object belong; and
using (304) an arc-tangent function to calculate a moving direction of the imaginary box, which is to be adjusted and to which the tracking corners of the moving object belong, wherein the moving direction is relative to the video image of the previous frame; and wherein the adjusting, according to the moving direction, the imaginary box to be adjusted of the moving object to implement complete extraction for the moving object comprises:
if the moving direction is the horizontal direction, keeping (305) the height of the imaginary box to be adjusted of the moving object unchanged, and adjusting, according to an actual ratio of the height of the moving object to the width of the moving object, the width of the imaginary box to be adjusted of the moving object to implement complete extraction for the moving object; or
if the moving direction is a non-horizontal direction, performing (306) three-dimensional extension for the imaginary box to be adjusted of the moving object along the opposite direction of the moving direction to implement complete extraction for the moving object.

2. The method for processing a video image according to claim 1, wherein the extracting shadows of moving objects in a current video image and getting squares upwards by using the upsides of the shadows as bases to obtain imaginary boxes of the moving objects comprises:
performing histogram equalization for the current video image;
performing binarization for a video image obtained through the histogram equalization;
performing morphological filtering for a video image obtained through the binarization to obtain shadows of moving objects in the video image;
searching for start points and end points of black pixels of the shadows of the moving objects in horizontal direction, determining widths of the shadows of the moving objects according to the start points and end points of the black pixels of the shadows of the moving objects, and marking a shadow, whose width is greater than a width threshold, of a moving object;
performing Canny edge detection for the marked shadow, whose width is greater than the width threshold, of the moving object to obtain shadow edge information;
performing contour extraction for the shadow, whose width is greater than the width threshold, of the moving object according to the shadow edge information to obtain a rectangular shadow; and
getting a square upwards by using the upside of the rectangular shadow as a base to obtain an imaginary box of the moving object.

3. The method for processing a video image according to claim 1, wherein the performing position filtering for the imaginary boxes of the moving objects according to a position relationship between the imaginary boxes of the moving objects to obtain an imaginary box of a moving object that actually exists comprises:
if the position relationship between the imaginary boxes of the moving objects is external tangency and/or external separation, regarding the imaginary boxes of the moving objects that are externally tangent to each other and/or externally separated from each other as imaginary boxes of moving objects that actually exist; and/or
if the position relationship between the imaginary boxes of the moving objects is inclusion and/or internal tangency, regarding an outer one of the imaginary boxes of the moving objects that are in an inclusion relationship and/or internally tangent to each other as an imaginary box of a moving object that actually exists; and/or
if the position relationship between the imaginary boxes of the moving objects is mutual intersection and an intersection area is greater than or equal to a threshold, regarding an outer imaginary box comprising the imaginary boxes of the moving objects that intersect each other and whose intersection area is greater than or equal to the threshold as an imaginary box of a moving object that actually exists, wherein a diagonal length of the outer imaginary box is equal to a length of a connection line of opposite angles farthest from each other between the imaginary boxes of the moving objects that intersect each other and whose intersection area is greater than or equal to the threshold, and the outer imaginary box is regarded as the imaginary box of the moving object that actually exists; and/or
if the position relationship between the imaginary boxes of the moving objects is mutual intersection and an intersection area is less than the threshold, regarding the imaginary boxes of the moving objects that intersect each other and whose intersection area is less than or equal to the threshold as imaginary boxes of moving objects that actually exist.

4. The method for processing a video image according to claim 3, wherein the extracting a partial contour of a moving object from the current video image and obtaining a central point of the partial contour of the moving object comprises:
performing an inter-frame difference operation for the current video image to obtain the partial contour of the moving object; and
after performing morphological filtering for the partial contour of the moving object, performing contour extraction to obtain the central point of the partial contour of the moving object; and
the determining an imaginary box, to which the central point of the partial contour of the moving object belongs, of a moving object, from the imaginary box of the moving object that actually exists, as an imaginary box to be adjusted of a moving object comprises:
performing a logical AND operation for the central point of the partial contour of the moving object and the imaginary box of the moving object that actually exists to obtain the imaginary box, to which the central point of the partial contour of the moving object belongs, of the moving object, from the imaginary box of the moving object that actually exists, as the imaginary box to be adjusted of the moving object.

5. A system for processing a video image, comprising:
an imaginary box extracting unit (501), configured to extract shadows of moving objects in a current video image and get squares upwards by using the upsides of the shadows as bases to obtain imaginary boxes of the moving objects; an imaginary box filtering unit (502), configured to perform position filtering for the imaginary boxes of the moving objects according to a position relationship between the imaginary boxes of the moving objects to obtain an imaginary box of a moving object that actually exists, extract a partial contour of a moving object from the current video image and obtain a central point of the partial contour of the moving object, and determine an imaginary box, to which the central point of the partial contour of the moving object belongs, of a moving object, from the imaginary box of the moving object that actually exists, as an imaginary box to be adjusted of a moving object; and
an imaginary box adjusting unit (503), configured to use comer-based optical flow to track a moving direction of the imaginary box to be adjusted of the moving object and adjust, according to the moving direction, the imaginary box to be adjusted of the moving object to implement complete extraction for the moving object;
**characterized in that** the imaginary box adjusting unit (503) comprises:
a corner optical flow tracking module (5031), configured to extract corners from the current video image and use corner-based optical flow to track corners, which match a video image of a previous frame, among the extracted corners as tracking corners;
a corner imaginary box attribution module (5032), configured to determine an imaginary box, which is to be adjusted and to which the tracking corners of a moving object belong; and
an adjusting module (5033), configured to use an arc-tangent function to calculate a moving direction of the imaginary box, which is to be adjusted and to which the track-ing corners of the moving object belong, wherein the moving direction is relative to the video image of the previous frame; and, in a situation in which the moving direction is the horizontal direction, whereby said adjusting modale is configured to keep the height of the imaginary box to be adjusted of the moving object unchanged, adjust, according to an actual ratio of the height of the moving object to the width of the moving object, the width of the imaginary box to be adjusted of the moving object to implement complete extraction for the moving object;
or, in a situation in which the moving direction is a non-horizontal direction, perform three-dimensional extension for the imaginary box to be adjusted of the moving object along the opposite direction of the moving direction to implement complete extraction for the moving object.

6. The system for processing a video image according to claim 5, wherein the imaginary box extracting unit (501), comprises:
a preprocessing module (5011), configured to perform histogram equalization for the current video image, perform binarization for a video image obtained through the histogram equalization, and perform morphological filtering for a video image obtained through the binarization to obtain shadows of moving objects in the video image;
a searching module (5012), configured to search for start points and end points of black pixels of the shadows of the moving objects in horizontal direction, determine widths of the shadows of the moving objects according to the start points and end points of the black pixels of the shadows of the moving objects, and mark a shadow, whose width is greater than a width threshold, of a moving object;
a contour extraction module (5013), configured to perform Canny edge detection for the shadow, whose width is greater than the width threshold and which is marked by the searching module, of the moving object to obtain shadow edge information, and perform contour extraction for the shadow, whose width is greater than the width threshold, of the moving object according to the shadow edge information to obtain a rectangular shadow; and
an imaginary box area generating module (5014), configured to get a square upwards by using the upside of the rectangular shadow as a base to obtain an imaginary box of the moving object.

7. The system for processing a video image according to claim 5, wherein the imaginary box filtering unit (502) comprises:
a position filtering module (5021), configured to: in a situation in which the position relationship between the imaginary boxes of the moving objects is external tangency and/or external separation, regard the imaginary boxes of the moving objects that are externally tangent to each other and/or externally separated from each other as imaginary boxes of moving objects that actually exist; and/or in a situation in which the position relationship between the imaginary boxes of the moving objects is inclusion and/or internal tangency, regard an outer one of the imaginary boxes of the moving objects that are in an inclusion relationship and/or internally tangent to each other as an imaginary box of a moving object that actually exists; and/or in a situation in which the position relationship between the imaginary boxes of the moving objects is mutual intersection and an intersection area is greater than or equal to a threshold, regard an outer imaginary box comprising the imaginary boxes of the moving objects that intersect each other and whose intersection area is greater than or equal to the threshold as an imaginary box of a moving object that actually exists, wherein a diagonal length of the outer imaginary box is equal to a length of a connection line of opposite angles farthest from each other between the imaginary boxes of the moving objects that intersect each other and whose intersection area is greater than or equal to the threshold, and the outer imaginary box is regarded as the imaginary box of the moving object that actually exists; and/or in a situation in which the position relationship between the imaginary boxes of the moving objects is mutual intersection and an intersection area is less than the threshold, regard the imaginary boxes of the moving objects that intersect each other and whose intersection area is less than or equal to the threshold as imaginary boxes of moving objects that actually exist.

8. The system for processing a video image according to claim 7, wherein the imaginary box filtering unit (502) further comprises:
an inter-frame difference module (5022), configured to perform an inter-frame difference operation for the current video image to obtain the partial contour of the moving object;
a partial contour extraction module (5023), configured to: after performing morphological filtering for the partial contour of the moving object, perform contour extraction to obtain the central point of the partial contour of the moving object; and
a logical AND module (5024), configured to perform a logical AND operation for the central point of the partial contour of the moving object and the imaginary box of the moving object that actually exists to obtain the imaginary box, to which the central point of the partial contour of the moving object belongs, of the moving object, from the imaginary box of the moving object that actually exists, as the imaginary box to be adjusted of the moving object.

## Patentansprüche

1. Verfahren zum Verarbeiten eines Videobildes, wobei das Verfahren Folgendes umfasst:
Extrahieren (101) der Schatten sich bewegender Objekte in einem aktuellen Videobild und Erhalten (101) von nach oben gerichteten Quadraten unter Verwendung der Oberseiten der Schatten als Basen, um imaginäre Kästen der sich bewegenden Objekte zu erhalten;
Ausführen einer Positionsfilterung (102) für die imaginären Kästen der sich bewegenden Objekte gemäß einer Positionsbeziehung zwischen den imaginären Kästen der sich bewegenden Objekte, um einen imaginären Kasten eines sich bewegenden Objekts, das tatsächlich vorhanden ist, zu erhalten; Extrahieren (102) eines Teilumrisses eines sich bewegenden Objekts von dem aktuellen Videobild und Erhalten eines Mittelpunkts des Teilumrisses des sich bewegenden Objekts; und
Bestimmen (102) eines imaginären Kastens, zu dem der Mittelpunkt des Teilumrisses des sich bewegenden Objekts gehört, eines sich bewegenden Objekts aus dem imaginären Kasten des sich bewegenden Objekts, das tatsächlich vorhanden ist, als einen einzustellenden imaginären Kasten eines sich bewegenden Objekts; und
Verwenden eines eckenbasierten Lichtflusses, um eine Bewegungsrichtung des einzustellenden imaginären Kastens des sich bewegenden Objekts zu verfolgen (103) und Einstellen (103) gemäß der Bewegungsrichtung des einzustellenden imaginären Kastens des sich bewegenden Objekts, um eine vollständige Extraktion für das sich bewegende Objekt zu implementieren;
**dadurch gekennzeichnet, dass** das Verwenden des eckenbasierten Lichtflusses, um eine Bewegungsrichtung des einzustellenden imaginären Kastens des sich bewegenden Objekts zu verfolgen, Folgendes umfasst:
Extrahieren (301) der Ecken aus dem aktuellen Videobild;
Verwenden des eckenbasierten Lichtflusses, um die Ecken, die einem Videobild eines vorhergehenden Rahmens entsprechen, unter den extrahierten Ecken als Verfolgungsecken zu verfolgen (302);
Bestimmen (303) eines imaginären Kastens, der einzustellen ist und zu dem die Verfolgungsecken eines sich bewegenden Objekts gehören; und
Verwenden (304) einer Arkustangens-Funktion, um eine Bewegungsrichtung des imaginären Kastens, der einzustellen ist und zu dem die Verfolgungsecken des sich bewegenden Objekts gehören, zu berechnen, wobei die Bewegungsrichtung bezüglich des Videobildes des vorhergehenden Rahmens ist; und
wobei das Einstellen gemäß der Bewegungsrichtung des einzustellenden imaginären Kastens des sich bewegenden Objekts, um die vollständige Extraktion für das sich bewegende Objekt zu implementieren, Folgendes umfasst:
falls die Bewegungsrichtung die horizontale Richtung ist, unverändertes Beibehalten (305) der Höhe des einzustellenden imaginären Kastens des sich bewegenden Objekts und Einstellen gemäß einem tatsächlichen Verhältnis der Höhe des sich bewegenden Objekts zur Breite des sich bewegenden Objekts der Breite des einzustellenden imaginären Kastens des sich bewegenden Objekts, um eine vollständige Extraktion für das sich bewegende Objekt zu implementieren; oder
falls die Bewegungsrichtung eine nicht horizontale Richtung ist, Ausführen (306) einer dreidimensionalen Erweiterung für den einzustellenden imaginären Kasten des sich bewegenden Objekts entlang der entgegengesetzten Richtung der Bewegungsrichtung, um eine vollständige Extraktion für das sich bewegende Objekt zu implementieren.

2. Verfahren zum Verarbeiten eines Videobilds nach Anspruch 1, wobei das Extrahieren der Schatten der sich bewegenden Objekte in einem aktuellen Videobild und das Erhalten der nach oben gerichteten Quadrate unter Verwendung der Oberseiten der Schatten als die Basen, um die imaginären Kästen der sich bewegenden Objekte zu erhalten, Folgendes umfasst:
Ausführen eines Histogrammausgleichs für das aktuelle Videobild;
Ausführen einer Binärisierung für ein durch den Histogrammausgleich erhaltenes Videobild;
Ausführen einer morphologischen Filterung für ein durch die Binärisierung erhaltenes Videobild, um die Schatten der sich bewegenden Objekte in dem Videobild zu erhalten;
Suchen nach den Anfangspunkten und den Endpunkten der schwarzen Bildpunkte der Schatten der sich bewegenden Objekte in einer horizontalen Richtung, Bestimmen der Breiten der Schatten der sich bewegenden Objekte gemäß den Anfangspunkten und den Endpunkten der schwarzen Bildpunkte der Schatten der sich bewegenden Objekte und Markieren eines Schattens, dessen Breite größer als ein Breitenschwellenwert ist, eines sich bewegenden Objekts;
Ausführen einer Canny-Kantendetektion für den markierten Schatten, dessen Breite größer als der Breitenschwellenwert ist, des sich bewegenden Objekts, um die Schatten-Kanteninformationen zu erhalten;
Ausführen einer Umrissextraktion für den Schatten, dessen Breite größer als der Breitenschwellenwert ist, des sich bewegenden Objekts gemäß den Schatten-Kanteninformationen, um einen rechteckigen Schatten zu erhalten; und
Erhalten eines nach oben gerichteten Quadrats unter Verwendung der Oberseite des rechteckigen Schattens als eine Basis, um einen imaginären Kasten des sich bewegenden Objekts zu erhalten.

3. Verfahren zum Verarbeiten eines Videobilds nach Anspruch 1, wobei das Ausführen einer Positionsfilterung für die imaginären Kästen der sich bewegenden Objekte gemäß einer Positionsbeziehung zwischen den imaginären Kästen der sich bewegenden Objekte, um einen imaginären Kasten eines sich bewegenden Objekts, das tatsächlich vorhanden ist, zu erhalten, Folgendes umfasst:
falls die Positionsbeziehung zwischen den imaginären Kästen der sich bewegenden Objekte eine äußere Berührung und/oder eine äußere Trennung ist, Betrachten der imaginären Kästen der sich bewegenden Objekte, die sich einander äußerlich berühren und/oder die äußerlich voneinander getrennt sind, als die imaginären Kästen der sich bewegenden Objekte, die tatsächlich vorhanden sind; und/oder falls die Positionsbeziehung zwischen den imaginären Kästen der sich bewegenden Objekte eine Inklusion und/oder eine innere Berührung ist, Betrachten eines äußeren der imaginären Kästen der sich bewegenden Objekte, die sich in einer Inklusionsbeziehung befinden und/oder sich einander intern berühren, als einen imaginären Kasten eines sich bewegenden Objekts, das tatsächlich vorhanden ist; und/oder
falls die Positionsbeziehung zwischen den imaginären Kästen der sich bewegenden Objekte eine gegenseitige Überschneidung ist und eine Fläche der Überschneidung größer als ein oder gleich einem Schwellenwert ist, Betrachten eines äußeren imaginären Kastens, der die imaginären Kästen der sich bewegenden Objekte umfasst, die sich einander überschneiden und deren Fläche der Überschneidung größer als der oder gleich dem Schwellenwert ist, als einen imaginären Kasten eines sich bewegenden Objekts, das tatsächlich vorhanden ist, wobei eine Diagonalenlänge des äußeren imaginären Kastens gleich einer Länge einer Verbindungslinie von gegenüberliegenden Winkeln, die sich am entferntesten voneinander befinden, zwischen den imaginären Kästen der sich bewegenden Objekte, die sich einander überschneiden und deren Fläche der Überschneidung größer als der oder gleich dem Schwellenwert ist, ist, wobei der äußere imaginäre Kasten als der imaginäre Kasten des sich bewegenden Objekts, das tatsächlich vorhanden ist, betrachtet wird; und/oder
falls die Positionsbeziehung zwischen den imaginären Kästen der sich bewegenden Objekte eine wechselseitige Überschneidung ist und eine Fläche der Überschneidung kleiner als der Schwellenwert ist, Betrachten der imaginären Kästen der sich bewegenden Objekte, die sich einander überschneiden und deren Fläche der Überschneidung kleiner als der oder gleich dem Schwellenwert ist, als die imaginären Kästen der sich bewegenden Objekte, die tatsächlich vorhanden sind.

4. Verfahren zum Verarbeiten eines Videobilds nach Anspruch 3, wobei das Extrahieren eines Teilumrisses eines sich bewegenden Objekts von dem aktuellen Videobild und das Erhalten eines Mittelpunkts des Teilumrisses des sich bewegenden Objekts Folgendes umfassen:
Ausführen einer Zwischenrahmen-Differenzoperation für das aktuelle Videobild, um einen Teilumriss des sich bewegenden Objekts zu erhalten; und
nach dem Ausführen der morphologischen Filterung für den Teilumriss des sich bewegenden Objekts Ausführen einer Umrissextraktion, um den Mittelpunkt des Teilumrisses des sich bewegenden Objekts zu erhalten; wobei
das Bestimmen eines imaginären Kastens, zu dem der Mittelpunkt des Teilumrisses des sich bewegenden Objekts gehört, eines sich bewegenden Objekts von dem imaginären Kasten des sich bewegenden Objekts, das tatsächlich vorhanden ist, als einen einzustellenden imaginären Kasten eines sich bewegenden Objekts Folgendes umfasst:
Ausführen einer logischen UND-Operation für den Mittelpunkt des Teilumrisses des sich bewegenden Objekts und den imaginären Kasten des sich bewegenden Objekts, das tatsächlich vorhanden ist, um den imaginären Kasten, zu dem der Mittelpunkt des Teilumrisses des sich bewegenden Objekts gehört, des sich bewegenden Objekts aus dem imaginären Kasten des sich bewegenden Objekts, das tatsächlich vorhanden ist, als den einzustellenden imaginären Kasten des sich bewegenden Objekts zu erhalten.

5. System zum Verarbeiten eines Videobildes, wobei das System Folgendes umfasst:
eine Extraktionseinheit (501) für imaginäre Kästen, die konfiguriert ist, die Schatten sich bewegender Objekte in einem aktuellen Videobild zu extrahieren und nach oben gerichtete Quadrate unter Verwendung der Oberseiten der Schatten als Basen, um imaginäre Kästen der sich bewegenden Objekte zu erhalten, zu erhalten;
eine Filterungseinheit (502) für imaginäre Kästen, die konfiguriert ist, eine Positionsfilterung für die imaginären Kästen der sich bewegenden Objekte gemäß einer Positionsbeziehung zwischen den imaginären Kästen der sich bewegenden Objekte auszuführen, um einen imaginären Kasten eines sich bewegenden Objekts, das tatsächlich vorhanden ist, zu erhalten, einen Teilumriss eines sich bewegenden Objekts von dem aktuellen Videobild zu extrahieren und einen Mittelpunkt des Teilumrisses des sich bewegenden Objekts zu erhalten, und einen imaginären Kasten, zu dem der Mittelpunkt des Teilumrisses des sich bewegenden Objekts gehört, eines sich bewegenden Objekts aus dem imaginären Kasten des sich bewegenden Objekts, das tatsächlich vorhanden ist, als einen einzustellenden imaginären Kasten eines sich bewegenden Objekts zu bestimmen; und
eine Einstelleinheit (503) für imaginäre Kästen, die konfiguriert ist, einen eckenbasierten Lichtfluss zu verwenden, um eine Bewegungsrichtung des einzustellenden imaginären Kastens des sich bewegenden Objekts zu verfolgen, und den einzustellenden imaginären Kasten des sich bewegenden Objekts gemäß der Bewegungsrichtung einzustellen, um eine vollständige Extraktion für das sich bewegende Objekt zu implementieren;
**dadurch gekennzeichnet, dass** die Einstelleinheit (503) für imaginäre Kästen Folgendes umfasst:
ein Lichtfluss-Eckenverfolgungsmodul (5031), das konfiguriert ist, die Ecken aus dem aktuellen Videobild zu extrahieren und den eckenbasierten Lichtfluss zu verwenden, um die Ecken, die einem Videobild eines vorhergehenden Rahmens entsprechen, unter den extrahierten Ecken als Verfolgungsecken zu verfolgen;
ein Eckenzuordnungsmodul (5032) für imaginäre Kästen, das konfiguriert ist, einen imaginären Kasten zu bestimmen, der einzustellen ist und zu dem die Verfolgungsecken eines sich bewegenden Objekts gehören; und
ein Einstellmodul (5033), das konfiguriert ist, eine Arkustangens-Funktion zu verwenden, um eine Bewegungsrichtung des imaginären Kastens, der einzustellen ist und zu dem die Verfolgungsecken des sich bewegenden Objekts gehören, zu berechnen, wobei die Bewegungsrichtung bezüglich des Videobildes des vorhergehenden Rahmens ist; und, in einer Situation, in der die Bewegungsrichtung die horizontale Richtung ist, wobei das Einstellmodul konfiguriert ist, die Höhe des einzustellenden imaginären Kastens des sich bewegenden Objekts unverändert beizubehalten, die Breite des einzustellenden imaginären Kastens des sich bewegenden Objekts gemäß einem tatsächlichen Verhältnis der Höhe des sich bewegenden Objekts zur Breite des sich bewegenden Objekts einzustellen, um eine vollständige Extraktion für das sich bewegende Objekt zu implementieren; oder, in einer Situation, in der die Bewegungsrichtung eine nicht horizontale Richtung ist, eine dreidimensionale Erweiterung für den einzustellenden imaginären Kasten des sich bewegenden Objekts entlang der entgegengesetzten Richtung der Bewegungsrichtung auszuführen, um eine vollständige Extraktion für das sich bewegende Objekt zu implementieren.

6. System zum Verarbeiten eines Videobildes nach Anspruch 5, wobei die Extraktionseinheit (501) für imaginäre Kästen Folgendes umfasst:
ein Vorverarbeitungsmodul (5011), das konfiguriert ist, einen Histogrammausgleich für das aktuelle Videobild auszuführen, eine Binärisierung für ein durch den Histogrammausgleich erhaltenes Videobild auszuführen und eine morphologische Filterung für ein durch die Binärisierung erhaltenes Videobild auszuführen, um die Schatten der sich bewegenden Objekte in dem Videobild zu erhalten;
ein Suchmodul (5012), das konfiguriert ist, nach den Anfangspunkten und den Endpunkten der schwarzen Bildpunkte der Schatten der sich bewegenden Objekte in einer horizontalen Richtung zu suchen, die Breiten der Schatten der sich bewegenden Objekte gemäß den Anfangspunkten und den Endpunkten der schwarzen Bildpunkte der Schatten der sich bewegenden Objekte zu bestimmen und einen Schatten, dessen Breite größer als ein Breitenschwellenwert ist, eines sich bewegenden Objekts zu markieren;
ein Umrissextraktionsmodul (5013), das konfiguriert ist, eine Canny-Kantendetektion für den Schatten, dessen Breite größer als der Breitenschwellenwert ist und der durch das Suchmodul markiert worden ist, des sich bewegenden Objekts auszuführen, um die Schatten-Kanteninformationen zu erhalten, und eine Umrissextraktion für den Schatten, dessen Breite größer als der Breitenschwellenwert ist, des sich bewegenden Objekts gemäß den Schatten-Kanteninformationen auszuführen, um einen rechteckigen Schatten zu erhalten; und
ein Flächenerzeugungsmodul (5014) für imaginäre Kästen, das konfiguriert ist, ein nach oben gerichtetes Quadrat unter Verwendung der Oberseite des rechteckigen Schattens als eine Basis zu erhalten, um einen imaginären Kasten des sich bewegenden Objekts zu erhalten.

7. System zum Verarbeiten eines Videobildes nach Anspruch 5, wobei die Filterungseinheit (502) für imaginäre Kästen Folgendes umfasst:
ein Positionsfilterungsmodul (5021), das konfiguriert ist: in einer Situation, in der die Positionsbeziehung zwischen den imaginären Kästen der sich bewegenden Objekte eine äußere Berührung und/oder eine äußere Trennung ist, die imaginären Kästen der sich bewegenden Objekte, die sich einander äußerlich berühren und/oder die äußerlich voneinander getrennt sind, als die imaginären Kästen der sich bewegenden Objekte, die tatsächlich vorhanden sind, zu betrachten; und/oder in einer Situation, in der die Positionsbeziehung zwischen den imaginären Kästen der sich bewegenden Objekte eine Inklusion und/oder eine innere Berührung ist, einen äußeren der imaginären Kästen der sich bewegenden Objekte, die sich in einer Inklusionsbeziehung befinden und/oder sich einander intern berühren, als einen imaginären Kasten eines sich bewegenden Objekts, das tatsächlich vorhanden ist, zu betrachten; und/oder in einer Situation, in der die Positionsbeziehung zwischen den imaginären Kästen der sich bewegenden Objekte eine gegenseitige Überschneidung ist und eine Fläche der Überschneidung größer als ein oder gleich einem Schwellenwert ist, einen äußeren imaginären Kasten, der die imaginären Kästen der sich bewegenden Objekte umfasst, die sich einander überschneiden und deren Fläche der Überschneidung größer als der oder gleich dem Schwellenwert ist, als einen imaginären Kasten eines sich bewegenden Objekts, das tatsächlich vorhanden ist, zu betrachten, wobei eine Diagonalenlänge des äußeren imaginären Kastens gleich einer Länge einer Verbindungslinie von gegenüberliegenden Winkeln, die sich am entferntesten voneinander befinden, zwischen den imaginären Kästen der sich bewegenden Objekte, die sich einander überschneiden und deren Fläche der Überschneidung größer als der oder gleich dem Schwellenwert ist, ist, wobei der äußere imaginäre Kasten als der imaginäre Kasten des sich bewegenden Objekts, das tatsächlich vorhanden ist, betrachtet wird; und/oder in einer Situation, in der die Positionsbeziehung zwischen den imaginären Kästen der sich bewegenden Objekte eine wechselseitige Überschneidung ist und eine Fläche der Überschneidung kleiner als der Schwellenwert ist, die imaginären Kästen der sich bewegenden Objekte, die sich einander überschneiden und deren Fläche der Überschneidung kleiner als der oder gleich dem Schwellenwert ist, als die imaginären Kästen der sich bewegenden Objekte, die tatsächlich vorhanden sind, zu betrachten.

8. System zum Verarbeiten eines Videobildes nach Anspruch 7, wobei die Filterungseinheit (502) für imaginäre Kästen ferner Folgendes umfasst:
ein Zwischenrahmen-Differenzmodul (5022), das konfiguriert ist, eine Zwischenrahmen-Differenzoperation für das aktuelle Videobild auszuführen, um einen Teilumriss des sich bewegenden Objekts zu erhalten;
ein Teilumriss-Extraktionsmodul (5023), das konfiguriert ist: nach dem Ausführen der morphologischen Filterung für den Teilumriss des sich bewegenden Objekts eine Umrissextraktion auszuführen, um den Mittelpunkt des Teilumrisses des sich bewegenden Objekts zu erhalten; und
ein Modul (5024) für ein logisches UND, das konfiguriert ist, eine logische UND-Operation für den Mittelpunkt des Teilumrisses des sich bewegenden Objekts und den imaginären Kasten des sich bewegenden Objekts, das tatsächlich vorhanden ist, auszuführen, um den imaginären Kasten, zu dem der Mittelpunkt des Teilumrisses des sich bewegenden Objekts gehört, des sich bewegenden Objekts aus dem imaginären Kasten des sich bewegenden Objekts, das tatsächlich vorhanden ist, als den einzustellenden imaginären Kasten des sich bewegenden Objekts zu erhalten.

## Revendications

1. Procédé de traitement d'une image vidéo, consistant à :
extraire (101) des ombres d'objets en mouvement dans une image vidéo courante et obtenir (101) des carrés ascendants en utilisant les côtés supérieurs des ombres comme bases pour obtenir des boîtes imaginaires des objets en mouvement ;
effectuer un filtrage de position (102) pour les boîtes imaginaires des objets en mouvement en fonction d'une relation de position entre les boîtes imaginaires des objets en mouvement afin d'obtenir une boîte imaginaire d'un objet en mouvement qui existe réellement ; extraire (102) un contour partiel d'un objet en mouvement à partir de l'image vidéo courante et obtenir un point central du contour partiel de l'objet en mouvement ; et déterminer (102) une boîte imaginaire, à laquelle le point central du contour partiel de l'objet en mouvement appartient, d'un objet en mouvement à partir de la boîte imaginaire de l'objet en mouvement qui existe réellement comme étant une boîte imaginaire à ajuster d'un objet en mouvement ; et
utiliser un flux optique basé sur des coins pour suivre (103) une direction de mouvement de la boîte imaginaire à ajuster de l'objet en mouvement et ajuster (103) en fonction de la direction de mouvement la boîte imaginaire à ajuster de l'objet en mouvement afin de réaliser une extraction complète pour l'objet en mouvement ;
**caractérisé en ce que** :
l'utilisation d'un flux optique basé sur des coins pour suivre une direction de mouvement de la boîte imaginaire à ajuster de l'objet en mouvement consiste à :
extraire (301) des coins de l'image vidéo courante ;
utiliser le flux optique basé sur des coins pour suivre (302) les coins qui correspondent à une image vidéo d'une trame précédente parmi les coins extraits en qualité de coins de suivi ;
déterminer (303) une boîte imaginaire à ajuster et à laquelle les coins de suivi d'un objet en mouvement appartiennent ; et
utiliser (304) une fonction d'arc de tangente pour calculer une direction de mouvement de la boîte imaginaire à ajuster et à laquelle les coins de suivi de l'objet en mouvement appartiennent ;
dans lequel la direction de mouvement est relative à l'image vidéo de la trame précédente ; et
dans lequel l'ajustement en fonction de la direction de mouvement de la boîte imaginaire à ajuster de l'objet en mouvement afin de réaliser une extraction complète pour l'objet en mouvement, consiste à :
si la direction de mouvement est la direction horizontale, maintenir inchangée (305) la hauteur de la boîte imaginaire à ajuster de l'objet en mouvement et ajuster, en fonction d'un rapport réel entre la hauteur de l'objet en mouvement et de la largeur de l'objet en mouvement, la largeur de la boîte imaginaire à ajuster de l'objet en déplacement afin de réaliser une extraction complète de l'objet en mouvement ; ou
si la direction de mouvement n'est pas une direction horizontale, effectuer (306) une extension tridimensionnelle pour la boîte imaginaire à ajuster de l'objet en mouvement le long de la direction opposée de la direction de mouvement afin de réaliser une extraction complète pour l'objet en mouvement.

2. Procédé de traitement d'une image vidéo selon la revendication 1, dans lequel l'extraction d'ombres d'objets en mouvement dans une image vidéo courante et l'obtention de carrés ascendants en utilisant les côtés supérieurs des ombres comme bases pour obtenir des boîtes imaginaires des objets en mouvement, consiste à :
effectuer une égalisation d'histogramme pour l'image vidéo courante ;
effectuer une binarisation pour une image vidéo obtenue par l'égalisation d'histogramme ;
effectuer un filtrage morphologique pour une image vidéo obtenue par la binarisation afin d'obtenir des ombres d'objets en mouvement dans l'image vidéo ;
rechercher des points de départ et des points de fin de pixels noirs des ombres des objets en mouvement dans la direction horizontale, déterminer les largeurs des ombres des objets en mouvement en fonction des points de départ et des points de fin des pixels noirs des ombres des objets en mouvement, et marquer une ombre, dont la largeur est supérieure à un seuil de largeur, d'un objet en mouvement ;
effectuer une détection de bord de Canny pour l'ombre marquée dont la largeur est supérieure au seuil de largeur, de l'objet en mouvement afin d'obtenir des informations de bord d'ombre ;
effectuer une extraction de contour pour l'ombre dont la largeur est supérieure à un seuil de largeur, de l'objet en mouvement en fonction des informations de bord d'ombre afin d'obtenir une ombre rectangulaire ; et
obtenir un carré ascendant en utilisant le côté supérieur de l'ombre rectangulaire en qualité de base pour obtenir une boîte imaginaire de l'objet en mouvement.

3. Procédé de traitement d'une image vidéo selon la revendication 1, dans lequel le filtrage de position pour les boîtes imaginaires des objets en mouvement en fonction d'une relation de position entre les boîtes imaginaires des objets en mouvement afin d'obtenir une boîte imaginaire d'un objet en mouvement qui existe réellement, consiste à :
si la relation de position entre les boîtes imaginaires des objets en mouvement est une tangence externe et/ou une séparation externe, considérer les boîtes imaginaires des objets en mouvement qui sont extérieurement tangentes les unes aux autres et/ou extérieurement séparées les unes des autres comme étant des boîtes imaginaires d'objets en mouvement qui existent réellement ; et/ou
si la relation de position entre les boîtes imaginaires des objets en mouvement est une inclusion et/ou une tangence interne, considérer une boîte externe parmi les boîtes imaginaires des objets en mouvement qui sont dans une relation d'inclusion et/ou de tangente interne les unes par rapport aux autres comme une boîte imaginaire d'un objet en mouvement qui existe réellement ; et/ou
si la relation de position entre les boîtes imaginaires des objets en mouvement est une intersection mutuelle et qu'une surface d'intersection est supérieure ou égale à un seuil, considérer une boîte imaginaire externe comprenant les boîtes imaginaires des objets en mouvement qui entrent en intersection et dont la surface d'intersection est supérieure ou égale au seuil comme étant une boîte imaginaire d'un objet en mouvement qui existe réellement, dans lequel une longueur de diagonale de la boîte imaginaire externe est égale à la longueur d'une ligne de connexion d'angles opposés les plus éloignés les uns des autres entre les boîtes imaginaires des objets en mouvement qui sont en intersection et dont la surface d'intersection est supérieure ou
égale au seuil, la boîte imaginaire externe étant considérée comme étant la boîte imaginaire de l'objet en mouvement qui existe réellement ; et/ou
si la relation de position entre les boîtes imaginaires des objets en mouvement est une intersection mutuelle et qu'une surface d'intersection est inférieure au seuil, considérer les boîtes imaginaires des objets en mouvement qui sont en intersection et dont la surface d'intersection est inférieure ou égale au seuil comme étant des boîtes imaginaires d'objets en mouvement qui existent réellement.

4. Procédé de traitement d'une image vidéo selon la revendication 3, dans lequel l'extraction d'un contour partiel d'un objet en mouvement à partir de l'image vidéo courante et l'obtention d'un point central du contour partiel de l'objet en mouvement, consiste à :
effectuer une opération de différence inter-trame pour l'image vidéo courante afin d'obtenir le contour partiel de l'objet en mouvement ; et
après avoir effectué un filtrage morphologique pour le contour partiel de l'objet en mouvement, effectuer une extraction de contour pour obtenir le point central du contour partiel de l'objet en mouvement ; et
la détermination d'une boîte imaginaire à laquelle le point central du contour partiel de l'objet en mouvement appartient, d'un objet en mouvement à partir de la boîte imaginaire de l'objet en mouvement qui existe réellement comme étant une boîte imaginaire à ajuster d'un objet en mouvement, consiste à :
effectuer une opération logique ET pour le point central du contour partiel de l'objet en mouvement et de la boîte imaginaire de l'objet en mouvement qui existe réellement afin d'obtenir la boîte imaginaire à laquelle le point central du contour partiel de l'objet en mouvement appartient, de l'objet en mouvement à partir de la boîte imaginaire de l'objet en mouvement qui existe réellement comme étant la boîte imaginaire à ajuster d'un objet en mouvement.

5. Système pour traiter une image vidéo, comprenant
une unité d'extraction de boîte imaginaire (501) conçue pour extraire des ombres d'objets en mouvement dans une image vidéo courante et obtenir des carrés ascendants en utilisant les côtés supérieurs des ombres comme bases pour obtenir des boîtes imaginaires des objets en mouvement ;
une unité de filtrage de boîte imaginaire (502) conçue pour effectuer un filtrage de position pour les boîtes imaginaires des objets en mouvement en fonction d'une relation de position entre les boîtes imaginaires des objets en mouvement afin d'obtenir une boîte imaginaire d'un objet en mouvement qui existe réellement, extraire un contour partiel d'un objet en mouvement à partir de l'image vidéo courante et obtenir un point central du contour partiel de l'objet en mouvement, et déterminer une boîte imaginaire, à laquelle le point central du contour partiel de l'objet en mouvement appartient, d'un objet en mouvement à partir de la boîte imaginaire de l'objet en mouvement qui existe réellement comme étant une boîte imaginaire à ajuster d'un objet en mouvement ; et
une unité d'ajustement de boîte imaginaire (503) conçue pour utiliser un flux optique basé sur des coins pour suivre une direction de mouvement de la boîte imaginaire à ajuster de l'objet en mouvement, et ajuster en fonction de la direction de mouvement la boîte imaginaire à ajuster de l'objet en mouvement afin de réaliser une extraction complète pour l'objet en mouvement ;
**caractérisé en ce que**
l'unité d'ajustement de boîte imaginaire (503) comprend :
un module de suivi de flux optique de coins (5031) conçu pour extraire des coins de l'image vidéo courante et utiliser le flux optique basé sur des coins pour suivre les coins qui correspondent à une image vidéo d'une trame précédente parmi les coins extraits en qualité de coins de suivi ;
un module d'attribution de boîte imaginaire de coins (5032) conçu pour déterminer une boîte imaginaire à ajuster et à laquelle les coins de suivi d'un objet en mouvement appartiennent ; et
un module d'ajustement (5033) conçu pour utiliser une fonction d'arc de tangente pour calculer une direction de mouvement de la boîte imaginaire à ajuster et à laquelle les coins de suivi de l'objet en mouvement appartiennent, dans lequel la direction de mouvement est relative à l'image vidéo de la trame précédente ; et, dans le cas où la direction de mouvement est la direction horizontale, ledit module d'ajustement est conçu pour maintenir inchangée la hauteur de la boîte imaginaire à ajuster de l'objet en mouvement et ajuster, en fonction d'un rapport réel entre la hauteur de l'objet en mouvement et la largeur de l'objet en mouvement, la largeur de la boîte imaginaire à ajuster de l'objet en déplacement afin de réaliser une extraction complète de l'objet en mouvement ; ou, dans le cas où la direction de mouvement n'est pas une direction horizontale, effectuer une extension tridimensionnelle pour la boîte imaginaire à ajuster de l'objet en mouvement le long de la direction opposée de la direction de mouvement afin de réaliser une extraction complète pour l'objet en mouvement.

6. Système pour traiter une image vidéo selon la revendication 5, dans lequel l'unité d'extraction de boîte imaginaire (501) comprend :
un module de prétraitement (5011) conçu pour effectuer une égalisation d'histogramme pour l'image vidéo courante, effectuer une binarisation pour une image vidéo obtenue par l'égalisation d'histogramme, effectuer un filtrage morphologique pour une image vidéo obtenue par la binarisation afin d'obtenir des ombres d'objets en mouvement dans l'image vidéo ;
un module de recherche (5012) conçu pour rechercher des points de départ et des points de fin de pixels noirs des ombres des objets en mouvement dans la direction horizontale, déterminer les largeurs des ombres des objets en mouvement en fonction des points de départ et des points de fin des pixels noirs des ombres des objets en mouvement, et marquer une ombre dont la largeur est supérieure à un seuil de largeur, d'un objet en mouvement ;
un module d'extraction de contour (5013) conçu pour effectuer une détection de bord de Canny pour l'ombre marquée par le module de recherche dont la largeur est supérieure au seuil de largeur, de l'objet en mouvement afin d'obtenir des informations de bord d'ombre, et effectuer une extraction de contour pour l'ombre dont la largeur est supérieure à un seuil de largeur, de l'objet en mouvement en fonction des informations de bord d'ombre afin d'obtenir une ombre rectangulaire ;
et
un module de génération de surface de boîte imaginaire (5014) conçu pour obtenir un carré ascendant en utilisant le côté supérieur de l'ombre rectangulaire en qualité de base pour obtenir une boîte imaginaire de l'objet en mouvement.

7. Système pour traiter une image vidéo selon la revendication 5, dans lequel l'unité de filtrage de boîte imaginaire (502) comprend :
un module de filtrage de position (5021) conçu pour : dans le cas où la relation de position entre les boîtes imaginaires des objets en mouvement est une tangence externe et/ou une séparation externe, considérer les boîtes imaginaires des objets en mouvement qui sont extérieurement tangentes les unes aux autres et/ou extérieurement séparées les unes des autres comme étant des boîtes imaginaires d'objets en mouvement qui existent réellement ; et/ou dans le cas où la relation de position entre les boîtes imaginaires des objets en mouvement est une inclusion et/ou une tangence interne, considérer une boîte externe parmi les boîtes imaginaires des objets en mouvement qui sont dans une relation d'inclusion et/ou de tangente interne les unes par rapport aux autres comme une boîte imaginaire d'un objet en mouvement qui existe réellement ; et/ou dans le cas où la relation de position entre les boîtes imaginaires des objets en mouvement est une intersection mutuelle et où une surface d'intersection est supérieure ou égale à un seuil, considérer une boîte imaginaire externe comprenant les boîtes imaginaires des objets en mouvement qui entrent en intersection et dont la surface d'intersection est supérieure ou égale au seuil comme étant une boîte imaginaire d'un objet en mouvement qui existe réellement, dans lequel une longueur de diagonale de la boîte imaginaire externe est égale à la longueur d'une ligne de connexion d'angles opposés les plus éloignés les uns des autres entre les boîtes imaginaires des objets en mouvement qui sont en intersection et dont la surface d'intersection est supérieure ou égale au seuil, la boîte imaginaire externe étant considérée comme étant la boîte imaginaire de l'objet en mouvement qui existe réellement ; et/ou dans le cas où la relation de position entre les boîtes imaginaires des objets en mouvement est une intersection mutuelle et où une surface d'intersection est inférieure au seuil, considérer les boîtes imaginaires des objets en mouvement qui sont en intersection et dont la surface d'intersection est inférieure ou égale au seuil comme étant des boîtes imaginaires d'objets en mouvement qui existent réellement.

8. Système pour traiter une image vidéo selon la revendication 7, dans lequel l'unité de filtrage de boîte imaginaire (502) comprend en outre :
un module de différence inter-trame (5022) conçu pour effectuer une opération de différence inter-trame pour l'image vidéo courante afin d'obtenir le contour partiel de l'objet en mouvement ;
un module d'extraction de contour partiel (5023) conçu pour, après avoir effectué un filtrage morphologique pour le contour partiel de l'objet en mouvement, effectuer une extraction de contour pour obtenir le point central du contour partiel de l'objet en mouvement ; et
un module de logique ET (5024) conçu pour effectuer une opération logique ET pour le point central du contour partiel de l'objet en mouvement et de la boîte imaginaire de l'objet en mouvement qui existe réellement afin d'obtenir une boîte imaginaire à laquelle le point central du contour partiel de l'objet en mouvement appartient, de l'objet en mouvement à partir de la boîte imaginaire de l'objet en mouvement qui existe réellement comme étant une boîte imaginaire à ajuster de l'objet en mouvement.
